# EUROPEAN PATENT SPECIFICATION

(11) **EP 1 798 579 B1**
(45) Date of publication and mention of the grant of the patent: **10.04.2013**
(21) Application number: 06118768.8
(22) Date of filing: 28.06.2000
(51) Int. Cl.: G02B 6/00, G02B 6/42

(54) **Condensing and collecting optical system using parabolic reflectors or a corresponding ellipsoid/hyperboloid pair of reflectors**
Kondensierendes und sammelndes optisches System,welches Parabolreflektoren oder ein korrespondierendes elliptisch-hyperboloid-förmiges Reflektorpaar verwendet
Système condensateur collecteur optique à miroirs paraboliques ou en paires ellipsoide/hyperboloide

(30) Priority: 01.07.1999 US 141832 P; 28.01.2000 US 178700 P; 29.03.2000 US 192879 P
(43) Date of publication of application: 20.06.2007
(62) Divisional of application: 00963256.3
(73) Proprietor: Wavien, Inc., Santa Clarita, CA 91355-1137 (US)
(72) Inventor: LI, M. Kenneth, K., Castaic, CA 91384 (US)
(74) Representative: Gerli, Paolo

(56) References cited:
- US-A- 4 473 295
- US-A- 5 191 393
- US-A- 5 430 634
- US-A- 5 707 131

## Description

### FIELD OF THE INVENTION

This invention relates to systems for collecting and condensing electromagnetic radiation, particularly a system incorporating parabolic reflectors for collecting radiation emitted from a radiation source and focusing the collected radiation onto a target.

### BACKGROUND OF THE INVENTION

The functional objective for systems that collect, condense, and couple electromagnetic radiation into a standard waveguide, such as a single fiber or fiber bundle, or outputs to a homogenizer of a projector, is to maximize the brightness (i.e., maximize the flux intensity) of the electromagnetic radiation at the target. The prior art teaches the use of so-called on-axis reflector systems involving spherical, ellipsoidal, and parabolic reflectors and off-axis reflector systems involving spherical, toroidal, and ellipsoidal reflectors. Where the target has dimensions that are similar to the size of the arc gaps of the electromagnetic radiation source, off-axis reflector systems achieve higher efficiency and brightness at the target than on-axis systems, thereby maximizing the amount of light that can be collected by a fiber optic target. For targets having dimensions that are much larger than the arc gaps ofthe electromagnetic source, both on-axis and off-axis reflector systems are effective for collecting, condensing, and coupling the radiation from a radiation source into a wave guide.

A disadvantage of on-axis systems is that they inherently redirect the radiation from the radiation source into larger images that are dependent on the direction ofthe emitted radiation, thus defeating the goal of concentrating the radiation into the smallest possible spot when the radiation source is incoherent. For example, a known on-axis ellipsoidal system produces magnifications that range from 2 to 8, dependent on the emission angle of the electromagnetic radiation. The variously magnified radiation beams are superimposed upon one another, thereby causing distortion and magnification of the collected image.

Furthermore, an ellipsoidal collecting and condensing system does not produce parallel (i.e., collimated) radiation beams. This is a disadvantage because collimated beams can facilitate filtering of the collected radiation when needed.

In known on-axis parabolic systems, the divergence of the reflected beam is also dependent on the angle of emission from the radiation source. Furthermore, such systems require the use of one or more focusing lens, which, under perfect conditions, produce a distorted image, and, in reality, typically produce badly aberrated images which effectively increase the image size and reduce brightness, or flux intensity. Furthermore, the outputs of an on-axis system are always circularly symmetric and, therefore, may not be suitable for non-circular targets.

U.S. Pat. No. 4,757,431 describes an improved condensing and collecting system employing an off-axis spherical concave reflector which enhances the maximum flux intensity illuminating a small target and the amount of collectable flux density by the small target. This system was further improved in U.S. Pat. No. 5,414,600, in which the off-axis concave reflector is an ellipsoid, and U.S. Pat. No. 5,430,634, in which the off-axis concave reflector is a toroid. Although the toroidal system described in the '634 patent corrects for astigmatism, and the ellipsoidal system of the '600 patent provides a more exact coupling than the spherical reflector of the '431 patent, each of these systems requires the application of an optical coating onto a highly curved reflective surface. Applying optical coatings to such curved surfaces is expensive, and achieving a uniform coating thickness is difficult. Furthermore, in such systems the source image is focused directly from the source to the target in a relatively small space, thereby making the insertion of other optical elements, such as filters and attenuators, difficult due to the lack of space.

U.S. Pat. No. 5,707,131 discloses an electromagnetic radiation collecting and condensing optical system includes a number of cascaded concave reflectors and a number of electromagnetic radiation or light sources which radiate light energy onto the concave reflectors in such manner that the energy from each source is combined by the reflectors into a single output which is used to illuminate a target, such as a single core optical fiber. According to one embodiment, a plurality of n sources are provided with n+1 reflectors, where a first reflector is a retro-reflector with a target being placed at the reflected image point of the last reflector. This embodiment allows further increase in brightness of the output by adding the outputs of the plural sources.

U.S. Pat. No. 5,406,462 discloses an apparatus including a reflective surface for high efficiency collection, transmission and emission of light. Light collected by an ellipsoidal and hyperboloidal portion of the reflective surface is directed into a light guide.

In the field of spectroscopy, it is necessary to focus electromagnetic radiation down to a very small spot at a sample under test and to thereafter collect the radiation reflected by the sample. Off-axis parabolic reflectors have been used for this purpose. U.S. Pat. No. 3,986,767 shows a system in which a parallel beam is focused into a small spot directly onto a sample under test using an off-axis paraboloid. U.S. Pat. No. Re 32,912 shows the use of paraboloids whereby light is focused onto a sample under test using one reflective paraboloid, and the light from that same focus is collected using a second reflective paraboloid. U.S. Pat. No. 4,473,295 describes yet another configuration for using reflective paraboloids to focus and collect radiation onto and from a sample under test.

U.S. Pat. No. 5,191,393, and its corresponding European Patent No. 0 401351 B1, describe a system whereby light is transmitted from a location outside a cleanroom to a location inside the cleanroom for performing optical measurement of small features. One of the configurations described for collecting and transmitting light includes an arc lamp, two parabolic reflectors, a single fiber target, and transmissive dichroic filters for filtering out unnecessary wavelengths. A first parabolic reflector collects light that is reflected from the source off of a filtering reflector and creates a collimated beam. The collimated beam may pass through one or more additional filters before impinging on the second parabolic reflector, which collects and focuses the collimated beam into the single-fiber target. None of these references, however, describes a system for achieving unit magnification between the source and the focused image so as to obtain the maximum flux intensity with the minimum distortion at the target.

Therefore, there remains a need to provide a method of collecting and concentrating electromagnetic radiation using parabolic reflectors that maximizes the flux intensity of the focused radiation beam at the target.

### SUMMARY OF THE INVENTION

In view of the foregoing, the invention provides an optical device for collecting electromagnetic radiation from a source of electromagnetic radiation and focusing the collected radiation onto a target to be illuminated with at least a portion of the electromagnetic radiation emitted by the source, as defined in claim 1. Preferred embodiments are defined in the subclaims.

Therewith an improved system for collecting and condensing electromagnetic radiation is provided which employs parabolic reflectors and achieves unit magnification, or near unit magnification, between a source image and a focused image at a target, thereby producing maximum focused intensity at the target.

The device includes a collimating reflector and a focusing reflector. The collimating reflector comprises at least a portion of a paraboloid of revolution and has an optical axis and a focal point on the optical axis. A source located proximate the focal point of the collimating reflector produces collimated rays of radiation reflected from the collimating reflector in a direction parallel to the optical axis. The focusing reflector comprises at least a portion of a paraboloid of revolution and has an optical axis and a focal point on the optical axis. The focusing reflector is positioned and oriented with respect to the collimating reflector so that the collimated rays of radiation reflected from the collimating reflector are reflected by the focusing reflector and focused toward a target located proximate the focal point of the focusing reflector. The collimating reflector and the focusing reflector have slightly different shapes or substantially the same size and shape and may be oriented optically about symmetrically with respect to each other so that each ray of radiation reflected by a surface portion of the collimating reflector is reflected by a corresponding surface portion of the focusing reflector toward the target to achieve substantially a unit magnification.

Filters or other optical elements can be arranged between the collimating and focusing reflectors.

### DESCRIPTION OF THE DRAWINGS

Embodiments will be described with reference to the attached drawings in which like components or features in the various figures are represented by like reference numbers.
FIG. 1 is a schematic view, shown in cross-section, of an embodiment of a condensing and collecting optical system.
FIG. 2 is a perspective view of a condensing and collecting optical system.
FIG. 3 is schematic view, shown in cross-section, of an alternate embodiment of the condensing and collecting optical system.
FIG. 4 is a schematic view, shown in cross-section, of another alternate embodiment of the condensing and collecting optical system.
FIG. 5a is a schematic view, shown in cross-section, of still another alternate embodiment of the condensing and collecting optical system.
FIG. 5b is an end view of the embodiment of FIG. 5a viewed in the direction indicated by the line A-A.
FIG. 6 is a perspective view of an embodiment of the condensing and collecting optical system ofthe present invention.
FIG. 7a is a schematic view, shown in cross-section, of the embodiment of FIG. 6 taken in the direction indicated by section line A--A.
FIG. 7b is a schematic view, shown in cross-section, of the embodiment of FIG. 6 taken in the direction of section line B--B.
FIGS. 8a-8f are schematic views of a plurality of polygonal waveguide targets in cross-sections which may be employed in embodiments of the present invention.
FIG. 9 is a schematic view of a circular cross-section waveguide target which may be utilized in the present invention.
FIG. 10a is a schematic side view illustrating an increasing taper waveguide target according to one embodiment of the invention.
FIG. 10b is a schematic side view illustrating a decreasing taper waveguide target in accordance with another embodiment.

### DETAILED DESCRIPTION OF EXEMPLARY EMBODIMENTS

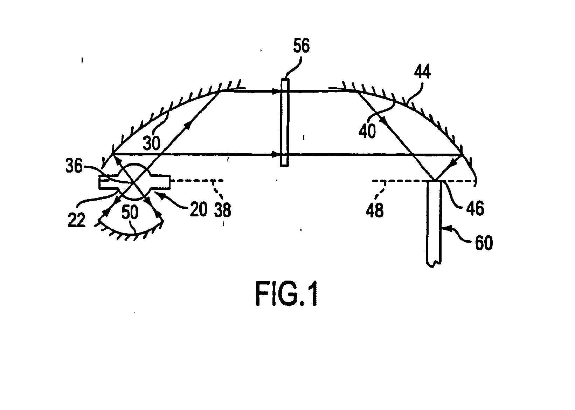

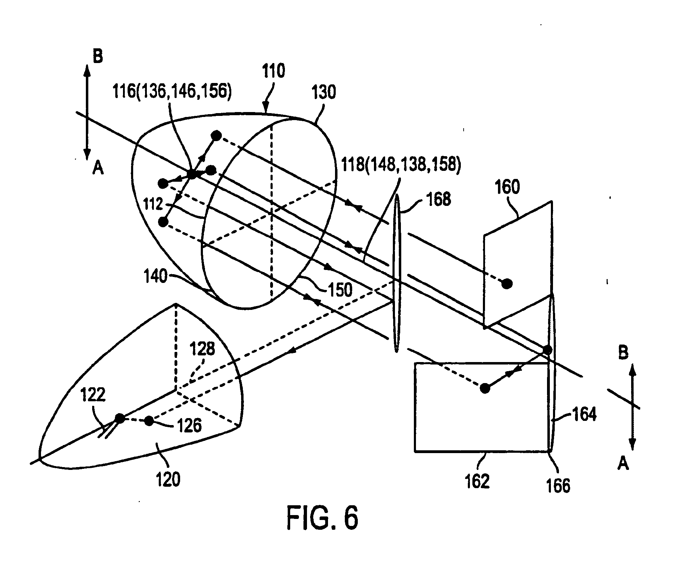

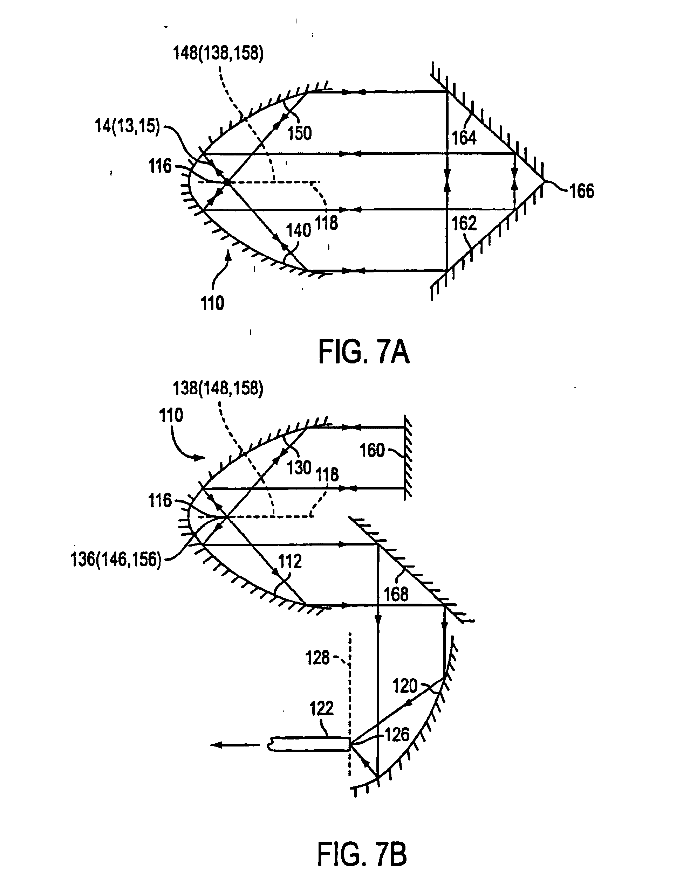

With reference to the figures, exemplary embodiments will now be described. These embodiments illustrate principles of the invention and should not be construed as limiting the scope of the invention. Only the embodiment of FIGs. 6, 7a and 7b is an embodiment in agreement with the teaching of claim 1, whereas the embodiments of FiGs. 1, 2, 3, 4, 5a and 5b are provided for comparison purposes and for illustrating certain basic principles underlying the invention.

Referring to FIG. 1, the invention has associated therewith the following four main components:

### 1. Electromagnetic Source

The electromagnetic source 20 is preferably a light source having an envelope 22. Most preferably, the source 20 comprises an arc lamp such as a xenon lamp, a metal-halide lamp, an HID lamp, or a mercury lamp. For certain applications, filament lamps, e.g. halogen lamps, can be used, provided the system is modified to accommodate the non-opaque filaments of the lamp, as will be described in more detail below.

### 2. Collimating Reflector

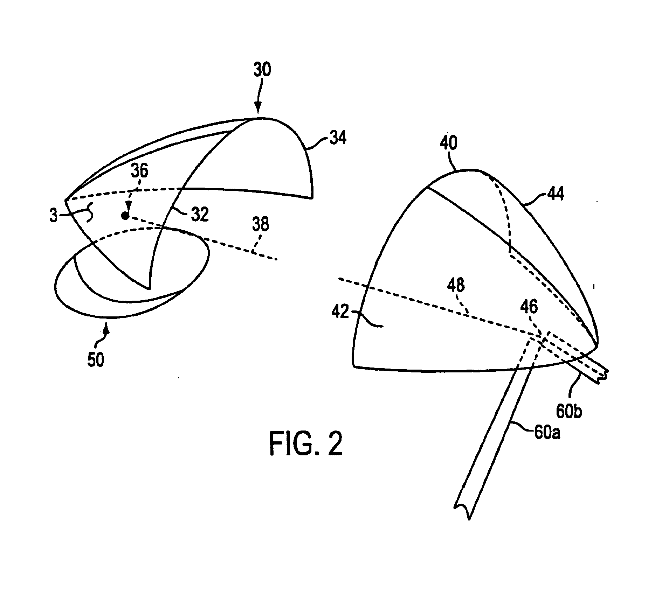

The collimating reflector 30 comprises a portion of a paraboloid of revolution having an optical axis 38 and a focal point 36. In the embodiment shown in FIG. 2, the collimating reflector 30 comprises a first quadrant 32 and a second quadrant 34 of a paraboloid of revolution.

Alternatively, the collimating reflector 30 may comprise a single quadrant, more or less, of a paraboloid of revolution. The collimating reflector 30 preferably has a reflective coating (e.g., aluminum or silver) and the surface is highly polished. For certain applications, the collimating reflector 30 can be made from glass coated with a wavelength-selective multi-layer dielectric coating. For example, a cold coating with high reflectivity only in the visible wavelengths can be used for visual light applications. With the source 20 placed at the focal point 36 of the collimating reflector, electromagnetic radiation that contacts the reflector 30 will be reflected as a collimated beam parallel to the optical axis 38 of the reflector 30. Where the source 20 is an arc lamp, the arc gap is preferably small compared to the focal length ofthe collimating reflector 30.

### 3. Focusing Reflector

The focusing reflector 40 comprises a portion of a paraboloid of revolution having an optical axis 48 and a focal point 46. As shown in FIG. 2, the focusing reflector 40 comprises a first quadrant 42 and second quadrant 44 of a paraboloid of revolution. Alternatively, the focusing reflector 40 may comprise a single quadrant, more or less, of a paraboloid of revolution. The focusing reflector 40 may be of slightly different shape, or may be of substantially the same size and substantially the same shape as the collimating reflector 30. For example, if the collimating reflector 30 comprises a single quadrant of a paraboloid of revolution, the focusing reflector 40 should be substantially a single quadrant of the same paraboloid of revolution.

The focusing reflector 40 is positioned and oriented so that the collimated electromagnetic radiation reflected by the collimating reflector 30 impinges the parabolic surface of the focusing reflector 40 and is thereafter focused toward the focal point 46 of the focusing reflector 40. In order to achieve unit magnification between the collimating reflector 30 and the focusing reflector 40 (i.e., a focused image that is substantially the same size as the source), it is important that each ray of electromagnetic radiation reflected and collimated by a surface portion of the collimating reflector 30 be reflected and focused by a corresponding surface portion of the focusing reflector 40 in order to achieve a focus at the focal point 46 that is of the maximum possible brightness. In the context of the present disclosure, orienting and positioning the collimating reflector 30 and the focusing reflector 40 with respect to each other so that each ray of electromagnetic radiation collimated by a surface portion of the collimating reflector 30 is focused by a corresponding surface portion of the focusing reflector 40 will be referred to as positioning the reflectors in "optical symmetry" with respect to each other.

### 4. Target

The target 60 is a small object requiring illumination with the highest intensity possible. In the preferred embodiment, the target 60 is a waveguide, such as a single core optic fiber, a fused bundle of optic fibers, a fiber bundle, or a homogenizer. An input end of the target, e.g. a proximal end of the optic fiber, is positioned at the focal point of the focusing reflector 40 to receive thereat the focused rays of electromagnetic radiation reflected by the focusing reflector 40.

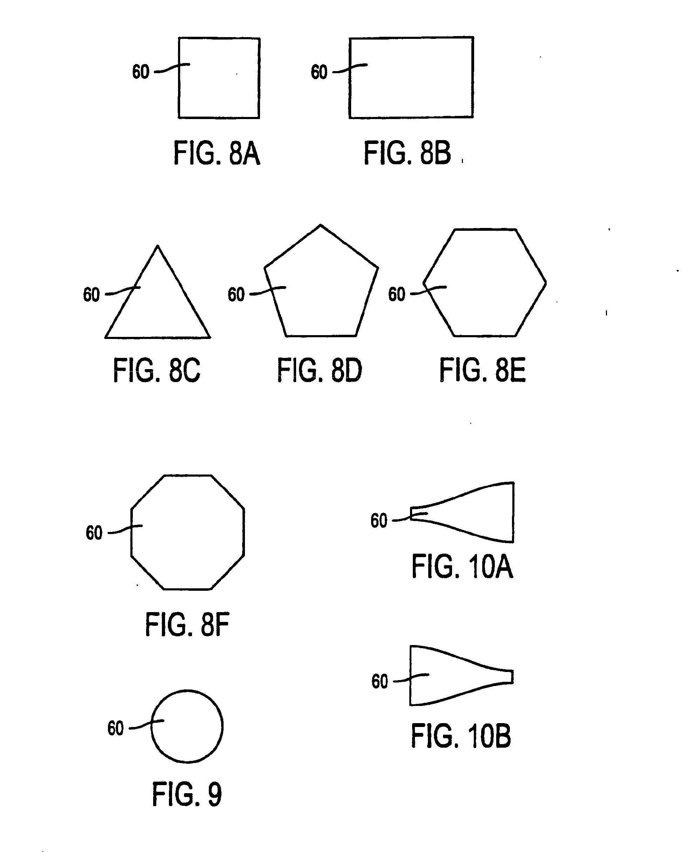

As noted above, the target 60 can be a waveguide, and can be polygonal in cross-section as shown in FIGS. 8a-8f, or circular in cross-section as shown in FIG. 9. Further, target 60 can be an increasing taper waveguide as shown in FIG. 10a, or a decreasing taper waveguide as shown in FIG. 10b.

While the target and the source are intimately associated with the collecting and condensing system of the present invention, according to its broader aspects, the invention relates to the use of two parabolic reflectors of substantially the same size and shape arranged so as to be optically symmetric with respect to each other.

Continuing with the description of the collecting and condensing system, in the arrangement shown in FIG. 1, the collimating reflector 30 and the focusing reflector 40 are positioned in an opposed, facing relation with respect to each other so as to be concave toward each other. Optical symmetry is achieved in the arrangement of FIG. 1 by arranging the collimating reflector 30 and the focusing reflector 40 so that their respective optical axes 38 and 48 are collinear and so that the reflective surface of the collimating reflector 30 is an opposed, facing relation with the corresponding reflecting surface of the focusing reflector 40 achieving a unit magnification.

As shown in FIG. 2, where the collimating reflector comprises a first quadrant 32 and a second quadrant 34 of a paraboloid of revolution, and the focusing reflector 40 comprises a first quadrant 42 and a second quadrant 44 of a similarly-sized and shaped paraboloid of revolution, it is possible to accommodate two targets, namely fibers 60a and 60b, so as to achieve two independent outputs. In the illustrated embodiment, the fiber 60a receives electromagnetic radiation from the second quadrant 34 of the collimating reflector 30 and the second quadrant 44 of the focusing reflector 40. The fiber 60b receives electromagnetic radiation from the first quadrant 32 of the collimating reflector 30 and the first quadrant 42 of the focusing reflector 40. To allow simultaneous placement of the two fibers 60a and 60b, the first quadrant 42 and the second quadrant 44 of the focusing reflector 40 must be spatially offset from one another by a small amount along the optical axis of the focusing reflector 40.

As shown in FIGS. 1 and 2, the collecting and condensing system may incorporate the use of a retro-reflector 50, which, in the illustrated embodiment, is a spherical retro-reflector. The retro-reflector 50 is positioned to capture electromagnetic radiation emitted by the source 20 that would not otherwise impinge on the collimating reflector 30. More particularly, the spherical retro-reflector 50 is constructed and arranged so that radiation emitted by the source 20 in a direction away from the collimating reflector 30 is reflected by the retro-reflector 50 back through the focal point 36 of the collimating reflector 30 and thereafter toward the collimating reflector 30. This additional radiation reflected by the collimating reflector 30 is collimated and added to the radiation that impinges the collimating reflector 30 directly from the source 20 to thereby increase the intensity of the collimated radiation reflected toward the focusing reflector 40. Consequently, the intensity ofthe radiation at the focal point 46 of the focusing reflector 40 is also increased.

Since the rays of radiation pass through focal point 36, it is apparent that sources 20 may be placed anywhere along a ray of radiation, such as, e.g. on the retro-reflector 50 or flat reflector 72, with substantially the same function and effect. In this case there may be no reason to polish retro-reflector 50 or flat reflector 72 to reflect radiation.

If a filament lamp is employed as the source 20, the retro-reflector cannot be oriented so that it focuses radiation back through the focal point 36 of the collimating reflector 30, because the retro-reflected radiation would be blocked by the opaque filaments located at the focal point 36. In this case, the position of the retro-reflector 50 should be adjusted so that the retro-reflected radiation does not pass precisely through the focal point 36.

As an alternative to a spherical retro-reflector, the retro-reflecting function can be performed by a two-dimensional corner cube array (not shown) with unit elements sized on the order of the arc size of the source 20 or smaller. Employing a two-dimensional corner cube array eliminates the need for precisely positioning a retro-reflector and will produce a tighter focus at the arc of the source 20.

As shown in FIG. 1, because ofthe spacial distance separating the collimating reflector 30 and the focusing reflector 40, various optical elements, such as filter 56, may be inserted between the reflectors 30 and 40. Because the electromagnetic radiation transmitted between the reflectors 30 and 40 is collimated, such optical elements can be of simple shape and design. As shown in FIG. 1, filter 56 is a planar filter.

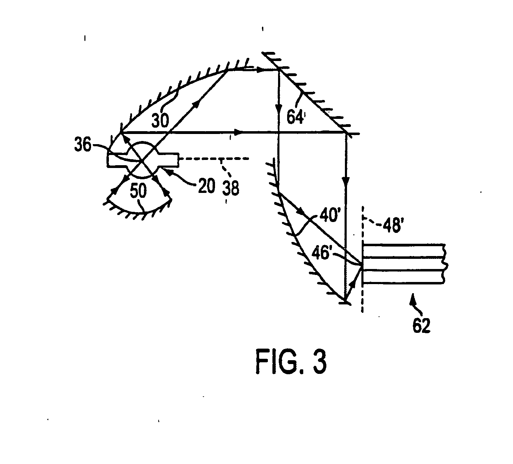

FIG. 3 shows an alternate arrangement of the collecting and condensing system. In the arrangement of FIG. 3, the target 62 is no longer a single optic fiber, but is a bundle of optic fiber 62 (although the arrangement shown could be used with any of the targets described above). Furthermore, in the arrangement of FIG. 3, a focusing reflector 40', having an optical axis 48' and a focal point 46', is offset with respect to the collimating reflector 30. That is, the optical axis 48' of the focusing reflector 40' is not collinear with the optical axis 38 of the collimating reflector 30 as in the embodiment of FIGS. 1 and 2. Optical symmetry between the collimating reflector 30 and the focusing reflector 40' (i.e., unit magnification) is achieved by employing a focusing reflector 40' that is of substantially the same size and shape as the collimating reflector 30 and by precisely positioning a redirecting reflector 64 in the path of the collimated electromagnetic radiation reflected from the collimating reflector 30. The redirecting reflector 64 is a flat reflector so that the reflected radiation is also collimated. The redirecting reflector 64 and the focusing reflector 40' are precisely positioned so that the redirected, collimated radiation is reflected from corresponding surface portions of both the collimating reflector 30 and the focusing reflector 40'.

The arrangement shown in FIG. 3 can be used in situations where spatial or other limitations do not permit the collimating reflector 30 and the focusing reflector 40' to be arranged with their respective optical axes 38, 48' collinear with each other. It should be appreciated that one or more additional redirecting reflectors may be employed to permit further spatial variation of the focusing reflector and the collimating reflector, so long as optical symmetry is maintained.

The redirecting reflector 64 may be a simple reflector, or it may be a reflective filter.

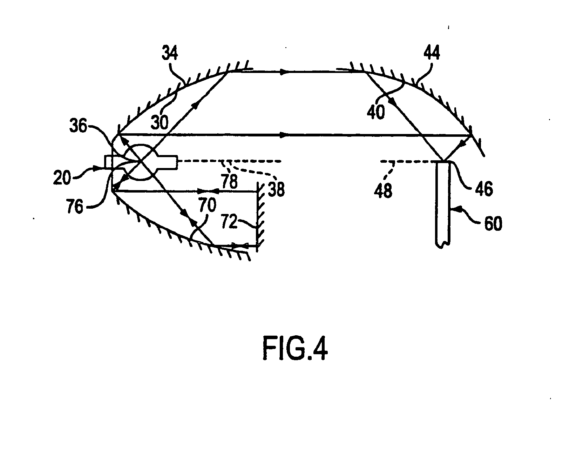

Another alternate arrangement ofthe collecting and condensing system is shown in FIG. 4. In the arrangement of FIG. 4, the spherical retro-reflector 50 is replaced by a secondary collimating reflector 70 comprising a paraboloid of revolution having an optical axis 78 and focal point 76 that preferably coincide with the optical axis 38 and the focal point 36, respectively, of the collimating reflector 30. The secondary collimating reflector 70 is preferably of the same size and shape as the collimating reflector 30. That is, if the collimating reflector 30 comprises a single quadrant of a paraboloid of revolution, the secondary collimating reflector 70 would also comprise a single quadrant of a similar paraboloid of revolution.

A flat reflector 72 is positioned substantially perpendicularly to the optical axis 78 at an output end of the secondary collimating reflector 70. As shown in the figure, radiation emitted by the source 20 away from the collimating reflector 30 is reflected and collimated by the secondary collimating reflector 70. The collimated radiation reflected by the reflector 70, which is parallel to the optical axis 78, reflects off the flat reflector 72 back into the secondary collimating reflector 70 and is thereafter reflected back through the focal points 76 and 36 toward the collimating reflector 30, to thereby increase the intensity ofthe collimated radiation reflected toward the focusing reflector 40. Thus, the secondary collimating reflector 70 and the flat reflector 72 function together as a retro-reflector.

If the collimating and secondary collimating reflectors each comprise two quadrants of a paraboloid of revolution, so that together they define a full paraboloid of revolution, each secondary collimating reflector quadrant will retro-reflect radiation toward the diametrically-opposed collimating reflector quadrant.

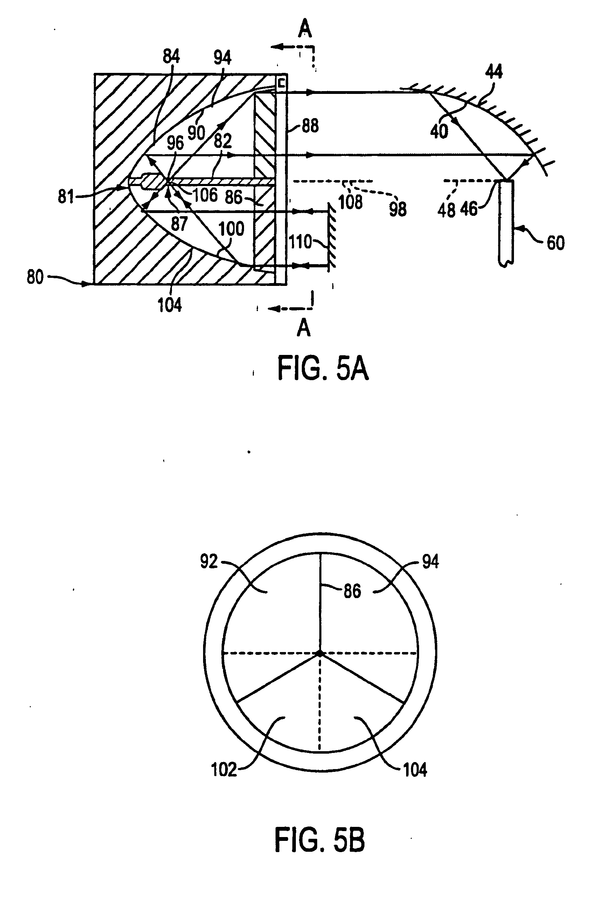

Another alternative arrangement of the collecting and condensing system is shown in FIGS. 5a and 5b. In the arrangement of FIG. 5a, the system includes a cermax lamp 80 having an anode 84, a cathode 82 supported by cathode support members 86, and an arc 87 between the anode and the cathode, which constitutes the source of the collecting and condensing system of FIG. 5a. The cermax lamp 80 includes a parabolic mirror 81 covered at an open end thereof by a window 88. An upper half of the parabolic mirror 81, including first quadrant 92 and second quadrant 94 of the paraboloid of revolution, constitutes the collimating reflector 90 of the system. A lower half of the parabolic reflector 81, including the third quadrant 102 and the fourth quadrant 104 of the paraboloid of revolution, constitutes first and second quadrants, respectively, of a secondary collimating reflector 100. The collimating reflector 90 has a focal point 96 and an optical axis 98, and the secondary collimating reflector 100 has a focal point 106 and an optical axis 108 that coincide with the focal point 96 and the optical axis 98, respectively, of the collimating reflector 90. A flat reflector 110 is disposed in front of an open end of the secondary collimating reflector 100 and is arranged so as to be perpendicular to the optical axis 108 thereof.

Much as with the arrangement of FIG. 4, radiation emitted at the arc 87 directly toward the collimating reflector 90 is reflected toward the focusing reflector 40 in collimated rays that are parallel to the optical axis 98. Radiation emitted by the arc 87 away from the collimating reflector 90 is reflected and collimated by the secondary collimating reflector 100 toward the flat reflector 110. The radiation is thereafter reflected by the flat reflector 110 back into the secondary collimating reflector 100 and through the focal point 96 to the collimating reflector 90. Thus, the secondary collimating reflector 100 and the flat reflector 110 together function as a retro-reflector. The retro-reflected radiation, together with the radiation emitted directly at the collimating reflector 90, is collimated by the first and second quadrants 92 and 94 of the collimating reflector 90 to become a parallel beam exiting the cermax lamp 80 through the window 88. To achieve unit magnification of the focused image at the target, a focusing reflector 40, having an optical axis 48 and a focal point 46, that is the same size and shape of the collimating reflector portion 90 of the cermax lamp is positioned in optical symmetry with respect to the collimating reflector 90. The collimated radiation reflected by the collimating reflector 90 will be focused by the focusing reflector 40 into a focused image having a size similar to the size of the arc 87.

FIGS. 6 and 7 show a preferred arrangement of the collecting and condensing system of the present invention in which the reflective output of an entire paraboloid of revolution is collected and condensed into a focusing reflector 120 comprising a single quadrant of a paraboloid of revolution having an optical axis 128 and a focal point 126. In particular, the parabolic reflector 110 defines a collimating reflector 112 having an optical axis 118 and a focal point 116 and comprising a single quadrant of the paraboloid of revolution. The parabolic reflector 110 further defines a first secondary collimating reflector 130 having an optical axis 138 and focal point 136, a second secondary collimating reflector 140 having an optical axis 148 and a focal point 146, and a third secondary collimating reflector having an optical axis 158 and focal point 156. The focal points 116, 136, 146, and 156 preferably coincide with one another as do the optical axes 118, 138, 148, and 158.

A redirecting reflector 168 is operatively positioned with respect to the collimating reflector 112 so as to redirect the collimated reflected output ofthe reflector 112 toward the focusing reflector 120, which is positioned and arranged so as to be optically symmetric with respect to the collimating reflector 112. Reflector 168 may be a simple reflector or a reflective filter.

A first flat reflector 160 is operatively positioned in front of the first secondary collimating reflector 130 and is arranged so as to be perpendicular to the optical axis 138. Reflector 160 reflects the collimated output ofthe first secondary collimating reflector 130 back into the reflector 130, thus functioning as a retro-reflector. The retro-reflected radiation is thereafter reflected back through the focal point 136 toward the second secondary collimating reflector 140.

A second flat reflector 162 and a third flat reflector 164 are arranged at right angles to one another and are operatively positioned in front of the second secondary collimating reflector 140 and the third secondary collimating reflector 150, respectively. The apex 166 formed by the right angle intersecting second and third flat reflectors 162 and 164 is arranged at a right angle to the optical axes 118, 138, 148, and 158. The collimated output ofthe second secondary collimating reflector 140 is reflected from the second flat reflector 162 to the third flat reflector 164 and thereafter back to the third secondary collimating reflector 150. The thus retro-reflected radiation is directed by the third secondary collimating reflector 150 back through its focal point 156 to the collimating reflector 112 and thereafter to the focusing reflector 120 after being redirected by the redirecting reflector 168.

The collimated output of the third secondary collimating reflector 150 is reflected from the third flat reflector 164 to the second flat reflector 162 and is thereafter retro-reflected into the second secondary collimating reflector 140. The thus retro-reflected radiation is directed by the second secondary collimating reflector 140 back through the focal point 146 to the first secondary collimating reflector 130.

Accordingly, it can be appreciated that the light collected by each of the collimating quadrants 112, 130, 140, and 150 is concentrated and focused by the focusing reflector 120 into the target 122.

## Claims

1. An optical device comprising:
a source of electromagnetic radiation (20) located proximate to a focal point (36) of a collimating reflector (30) to produce collimated rays of radiation reflected from said collimating reflector in a direction substantially parallel to an optical axis (38) of said collimating reflector (30);
a target (60) to be illuminated with at least a portion of the electromagnetic radiation emitted by said source, and
a focusing reflector (40) comprising at least a portion (42, 44) of a paraboloid of revolution, said focusing reflector (40) having an optical axis (48) and a focal point (46) on said optical axis (48), said target (60) being located proximate said focal point (46) of said focusing reflector (40), said focusing reflector (40) being positioned and oriented with respect to said collimating reflector (30) so that the collimated rays of radiation reflected from said collimating reflector (30) are reflected by said focusing reflector (40) and focused substantially toward said target (60),
the collimating reflector (30) and the focusing reflector (40) comprising a collimating/focusing reflector pair consisting of:
a pair of reflectors, each reflector of the pair of reflectors comprising at least a portion (32, 34, 42, 44) of a substantial paraboloid of revolution and having about the same size and shape, with the collimating reflector (30) and focusing reflector (40) having a corresponding size and optical orientation with respect to each other so that substantially each ray of radiation reflected by a surface portion of said collimating reflector (30) is reflected by a corresponding surface portion of said focusing reflector (40) toward said target (60) so as to achieve substantially unit magnification between the source and an image focused onto said target (60),
wherein the optical device further comprises one or more additional reflectors (50, 64, 70, 72) constructed and arranged to reflect at least part of the portion of the electromagnetic radiation emitted by said source (20) that does not impinge directly on said collimating reflector (30) toward said collimating reflector (30) through the focal point (36) of said collimating reflector (30) to increase the flux intensity of the collimated rays,
wherein said collimating reflector (112) and said focusing reflector (120) each comprise a single quadrant of a paraboloid of revolution and said additional reflectors comprise:
first, second, and third secondary collimating reflectors (130, 140, 150), each comprising a quadrant of a paraboloid of revolution having optical axes (138, 148, 158) that substantially coincide with the optical axis of said collimating reflector (118) and focal points (136, 146, 156) substantially coincident with the focal point (116) of said collimating reflector so that electromagnetic radiation emitted from said source (20) in a direction away from said collimating reflector produces collimated rays of electromagnetic radiation reflected from said first, second, and third secondary collimating reflectors (130, 140, 150) in a direction parallel to the optical axes of said secondary collimating reflectors;
a redirecting reflector (168) positioned with respect to the collimating reflector (112) so as to redirect the collimated reflected output of the reflector (112) toward the focusing reflector (120),
a first generally flat reflector (160) that is substantially perpendicular to the optical axis (138) of said first secondary collimating reflector (130) and constructed and arranged to reflect the collimated rays of electromagnetic radiation reflected from said first secondary collimating reflector (130) to produce collimated rays of electromagnetic radiation reflected from said first flat reflector (160) in a direction parallel to the optical axis (138) of said first secondary collimating reflector (130), the collimated rays reflected from said first flat reflector (160) thereafter being reflected by said first secondary collimating reflector (130) toward said second secondary collimating reflector (140) through the focal point (146) of said second secondary collimating reflector (140); and
second and third generally flat reflectors (162, 164) oriented perpendicularly with respect to each other and operatively disposed in front of said second and third secondary collimating reflectors (140, 150), respectively, said second and third flat reflectors (140, 150) being constructed and arranged to:
(1) reflect the collimated rays of electromagnetic radiation reflected from said second secondary collimating reflector (162) from said second flat reflector (162) toward said third flat reflector (164) to produce collimated rays of electromagnetic radiation reflected from said third flat reflector (164) in a direction parallel to the optical axis (158) of said third secondary collimating reflector (150), the collimated rays reflected from said third flat reflector (164) thereafter being reflected by said third secondary collimating reflector (150) toward said collimating reflector (112) through the focal point (118) of said collimating reflector (112), and
(2) reflect the collimated rays of electromagnetic radiation reflected from said third secondary collimating reflector (150) from said third flat reflector (164) toward said second flat reflector (162) to produce collimated rays of electromagnetic radiation reflected from said second flat reflector (162) in a direction parallel to the optical axis (148) of said second secondary collimating reflector (140), the collimated rays reflected from said second flat reflector (162) thereafter being reflected by said second secondary collimating reflector (140) toward said first secondary collimating reflector through the focal point (136) of said first secondary collimating reflector (130).

2. The optical device of claim 1, wherein said source (20) comprises a light-emitting arc lamp.

3. The optical device of claim 2, wherein said arc lamp comprises a lamp selected from the group comprising a xenon lamp, a metal halide lamp, an HID lamp, or a mercury lamp.

4. The optical device of claim 1, wherein said source (20) comprises a filament lamp.

5. The optical device of claim 1, wherein said target (60) comprises a waveguide selected from the group comprising a single core optic fiber, a fiber bundle, a fused fiber bundle (62), or a homogenizer.

6. The optical device of claim 5 wherein said waveguide (60) is selected from the group consisting of circular cross-section waveguides, polygonal cross-section waveguides, tapered waveguides and combinations thereof.

## Patentansprüche

1. Optische Vorrichtung, umfassend:
eine Quelle für elektromagnetische Strahlung (20), die proximal zu einem Brennpunkt (36) eines kollimierenden Reflektors (30) angeordnet ist, um kollimierte Strahlen von von dem kollimierenden Reflektor reflektierter Strahlung in einer Richtung im Wesentlichen parallel zu einer optischen Achse (38) des kollimierenden Reflektors (30) zu erzeugen;
ein Ziel (60), das mit zumindest einem Teil der von der Quelle emittierten elektromagnetischen Strahlung zu beleuchten ist, und
einen fokussierenden Reflektor (40), der zumindest einen Abschnitt (42, 44) eines Rotationsparaboloids umfasst, wobei der fokussierende Reflektor (40) eine optische Achse (48) und einen Brennpunkt (46) auf der optischen Achse (48) aufweist, wobei das Ziel (60) proximal zu dem Brennpunkt (46) des fokussierenden Reflektors (40) angeordnet ist, wobei der fokussierende Reflektor (40) mit Bezug auf den kollimierenden Reflektor (30) derart positioniert und orientiert ist, dass die kollimierten Strahlen von von dem kollimierenden Reflektor (30) reflektierter Strahlung durch den fokussierenden Reflektor (40) reflektiert und im Wesentlichen zu dem Ziel (60) hin fokussiert werden,
wobei der kollimierende Reflektor (30) und der fokussierende Reflektor (40) ein Paar aus einem kollimierenden / einem fokussierenden Reflektor umfassen, bestehend aus:
einem Paar Reflektoren, wobei jeder Reflektor des Paars aus Reflektoren zumindest einen Abschnitt (32, 34, 42, 44) eines allgemeinen Rotationsparaboloids umfasst und etwa die gleiche Größe und Form aufweist, wobei der kollimierende Reflektor (30) und der fokussierende Reflektor (40) eine entsprechende Größe und optische Orientierung mit Bezug zueinander aufweisen, so dass im Wesentlichen jeder Strahl von durch einen Oberflächenabschnitt des kollimierenden Reflektors (30) reflektierter Strahlung durch einen entsprechenden Oberflächenabschnitt des fokussierenden Reflektors (40) zu dem Ziel (60) hin reflektiert wird, um eine Vergrößerung von im Wesentlichen Eins zwischen der Quelle und einem auf das Ziel (60) fokussierten Bild zu erreichen;
wobei die optische Vorrichtung ferner einen oder mehrere zusätzliche Reflektoren (50, 64, 70, 72) umfasst, die aufgebaut und angeordnet sind, um zumindest einen Teil des Anteils der elektromagnetischen Strahlung, die durch die Quelle (20) emittiert wird, der nicht direkt auf den kollimierenden Reflektor (30) auftrifft, zu dem kollimierenden Reflektor (30) hin durch den Brennpunkt (36) des kollimierenden Reflektors (30) zu reflektieren, um die Flussdichte der kollimierten Strahlen zu erhöhen,
wobei der kollimierende Reflektor (112) und der fokussierende Reflektor (120) jeweils einen einzigen Quadranten eines Rotationsparaboloids umfassen, und die zusätzlichen Reflektoren umfassen:
einen ersten, zweiten und dritten sekundären kollimierenden Reflektor (130, 140, 150), die jeweils einen Quadranten eines Rotationsparaboloids umfassen und optische Achsen (138, 148, 158), die im Wesentlichen mit der optischen Achse des kollimierenden Reflektors (118) zusammenfallen, und Brennpunkte (136, 146, 156) aufweisen, die im Wesentlichen mit dem Brennpunkt (116) des kollimierenden Reflektors zusammenfallen, so dass elektromagnetische Strahlung, die von der Quelle (20) emittiert wird, in einer Richtung von dem kollimierenden Reflektor weg kollimierte Strahlen elektromagnetischer Strahlung erzeugt, die von dem ersten, zweiten und dritten sekundären kollimierenden Reflektor (130, 140, 150) in einer Richtung parallel zu der optischen Achse der sekundären kollimierenden Reflektoren reflektiert werden;
einen umlenkenden Reflektor (168), der mit Bezug auf den kollimierenden Reflektor (112) derart angeordnet ist, dass er den kollimierten reflektierten Ausgang des Reflektors (112) zu dem fokussierenden Reflektor (120) hin umlenkt,
einen ersten im Allgemeinen flachen Reflektor (160), der im Wesentlichen senkrecht zu der optischen Achse (138) des ersten sekundären kollimierenden Reflektors (130) steht und aufgebaut und angeordnet ist, um die kollimierten Strahlen elektromagnetischer Strahlung, die von dem ersten sekundären kollimierenden Reflektor (130) reflektiert werden, umzulenken, um kollimierte Strahlen elektromagnetischer Strahlung zu erzeugen, die von dem ersten flachen Reflektor (160) in einer Richtung parallel zu der optischen Achse (138) des ersten sekundären kollimierenden Reflektors (130) reflektiert werden, wobei die kollimierten Strahlen, die von dem ersten flachen Reflektor (160) reflektiert werden, danach durch den ersten sekundären kollimierenden Reflektor (130) zu dem zweiten sekundären kollimierenden Reflektor (140) durch den Brennpunkt (146) des zweiten sekundären kollimierenden Reflektors (140) reflektiert werden; und
einen zweiten und dritten im Allgemeinen flachen Reflektor (162, 164), die senkrecht mit Bezug zueinander orientiert und funktional jeweils vor dem zweiten bzw. dritten sekundären kollimierenden Reflektor (140, 150) angeordnet sind, wobei der zweite und dritte flache Reflektor (140, 150) aufgebaut und angeordnet sind, um:
(1) die kollimierten Strahlen elektromagnetischer Strahlung, die von dem zweiten sekundären kollimierenden Reflektor (162) reflektiert werden, von dem zweiten flachen Reflektor (162) zu dem dritten flachen Reflektor (164) hin zu reflektieren, um kollimierte Strahlen elektromagnetischer Strahlung zu erzeugen, die von dem dritten flachen Reflektor (164) in einer Richtung parallel zu der optischen Achse (158) des dritten sekundären kollimierenden Reflektors (150) reflektiert werden, wobei die kollimierten Strahlen, die von dem dritten flachen Reflektor (164) reflektiert werden, danach durch den dritten sekundären kollimierenden Reflektor (150) zu dem kollimierenden Reflektor (112) hin durch den Brennpunkt (118) des kollimierenden Reflektors (112) reflektiert werden, und
(2) die kollimierten Strahlen elektromagnetischer Strahlung, die von dem dritten sekundären kollimierenden Reflektor (150) reflektiert werden, von dem dritten flachen Reflektor (164) zu dem zweiten flachen Reflektor (162) hin zu reflektieren, um kollimierte Strahlen elektromagnetischer Strahlung zu erzeugen, die von dem zweiten flachen Reflektor (162) in einer Richtung parallel zu der optischen Achse (148) des zweiten sekundären kollimierenden Reflektors (140) reflektiert werden, wobei die kollimierten Strahlen, die von dem zweiten flachen Reflektor (162) reflektiert werden, danach durch den zweiten sekundären kollimierenden Reflektor (140) zu dem ersten sekundären kollimierenden Reflektor hin durch den Brennpunkt (136) des ersten sekundären kollimierenden Reflektors (130) reflektiert werden.

2. Optische Vorrichtung nach Anspruch 1,
wobei die Quelle (20) eine lichtemittierende Bogenlampe umfasst.

3. Optische Vorrichtung nach Anspruch 2,
wobei die Bogenlampe eine Lampe umfasst, die aus der Gruppe ausgewählt ist, die eine Xenonlampe, eine Metall-Halogen-Lampe, eine HID-Lampe oder eine Quecksilberlampe umfasst.

4. Optische Vorrichtung nach Anspruch 1,
wobei die Quelle (20) eine Glühlampe umfasst.

5. Optische Vorrichtung nach Anspruch 1,
wobei das Ziel (60) einen Wellenleiter umfasst, der aus der Gruppe ausgewählt ist, die eine optische Einkernfaser, ein Faserbündel, ein Faseroptikbündel (62) oder einen Homogenisierer umfasst.

6. Optische Vorrichtung nach Anspruch 5,
wobei der Wellenleiter (60) aus der Gruppe ausgewählt ist, die aus Wellenleitern mit kreisförmigem Querschnitt, Wellenleitern mit polygonem Querschnitt, verjüngten Wellenleitern und Kombinationen davon besteht.

## Revendications

1. Dispositif optique comprenant :
une source de rayonnement électromagnétique (20) située à proximité d'un foyer (36) d'un réflecteur de collimation (30) pour produire des rayons collimatés de rayonnement réfléchis à partir dudit réflecteur de collimation dans une direction sensiblement parallèle à un axe optique (38) dudit réflecteur de collimation (30) ;
une cible (60) à illuminer avec au moins une portion du rayonnement électromagnétique émis par ladite source, et
un réflecteur de focalisation (40) comprenant au moins une portion (42, 44) d'un paraboloïde de révolution, ledit réflecteur de focalisation (40) ayant un axe optique (48) et un foyer (46) sur ledit axe optique (48), ladite cible (60) étant située à proximité dudit foyer (46) dudit réflecteur de focalisation (40), ledit réflecteur de focalisation (40) étant positionné et orienté par rapport audit réflecteur de collimation (30) de sorte que les rayons collimatés de rayonnement réfléchis depuis ledit réflecteur de collimation (30) soient réfléchis par ledit réflecteur de focalisation (40) et focalisés sensiblement vers ladite cible (60),
le réflecteur de collimation (30) et le réflecteur de focalisation (40) comprenant une paire de réflecteurs de collimation/focalisation constituée par :
une paire de réflecteurs, chaque réflecteur de la paire de réflecteurs comprenant au moins une portion (32, 34, 42, 44) d'un paraboloïde de révolution substantiel ayant environ les mêmes taille et forme, le réflecteur de collimation (30) et le réflecteur de focalisation (40) ayant une taille correspondante et une orientation optique l'un par rapport à l'autre de sorte que sensiblement chaque rayon de rayonnement réfléchi par une portion de surface dudit réflecteur de collimation (30) soit réfléchi par une portion de surface correspondante dudit réflecteur de focalisation (40) vers ladite cible (60) de façon à accomplir un grossissement sensiblement unitaire entre la source et une image focalisée sur ladite cible (60),
dans lequel le dispositif optique comprend en outre un ou plusieurs réflecteurs additionnels (50, 64, 70, 72) construits et agencés pour réfléchir au moins une partie de la portion du rayonnement électromagnétique émis par ladite source (20) qui ne vient pas frapper directement ledit réflecteur de collimation (30) vers ledit réflecteur de collimation (30) par l'intermédiaire du foyer (36) dudit réflecteur de collimation (30) pour augmenter l'intensité de flux des rayons collimatés,
dans lequel ledit réflecteur de collimation (112) et ledit réflecteur de focalisation (120) comprennent chacun un seul quadrant d'un paraboloïde de révolution et lesdits réflecteurs additionnels comprennent :
des premier, deuxième et troisième réflecteurs de collimation secondaires (130, 140, 150), comprenant chacun un quadrant d'un paraboloïde de révolution ayant des axes optiques (138, 148, 158) qui coïncident sensiblement avec l'axe optique dudit réflecteur de collimation (118) et des foyers (136, 146, 156) coïncidant sensiblement avec le foyer (116) dudit réflecteur de collimation de sorte qu'un rayonnement électromagnétique émis par ladite source (20) dans une direction en éloignement dudit réflecteur de collimation produise des rayons collimatés de rayonnement électromagnétique réfléchis par lesdits premier, deuxième et troisième réflecteurs de collimation secondaires (130, 140, 150) dans une direction parallèle aux axes optiques desdits réflecteurs de collimation secondaires ;
un réflecteur de redirection (168) positionné par rapport au réflecteur de collimation (112) de façon à rediriger la sortie réfléchie collimatée du réflecteur (112) vers le réflecteur de focalisation (120),
un premier réflecteur généralement plat (160) qui est sensiblement perpendiculaire à l'axe optique (138) dudit premier réflecteur de collimation secondaire (130) et construit et agencé pour réfléchir les rayons collimatés de rayonnement électromagnétique réfléchis par ledit premier réflecteur de collimation secondaire (130) pour produire des rayons collimatés de rayonnement électromagnétique réfléchis par ledit premier réflecteur plat (160) dans une direction parallèle à l'axe optique (138) dudit premier réflecteur de collimation secondaire (130), les rayons collimatés réfléchis par ledit premier réflecteur plat (160) étant ensuite réfléchis par ledit premier réflecteur de collimation secondaire (130) vers ledit deuxième réflecteur de collimation secondaire (140) par l'intermédiaire du foyer (146) dudit deuxième réflecteur de collimation secondaire (140) ; et
des deuxième et troisième réflecteurs généralement plats (162, 164) orientés perpendiculairement l'un par rapport à l'autre et disposés opérationnellement en face desdits deuxième et troisième réflecteurs de collimation secondaires (140, 150), respectivement, lesdits deuxième et troisième réflecteurs plats (140, 150) étant construits et agencés pour :
(1) réfléchir les rayons collimatés de rayonnement électromagnétique réfléchis par ledit deuxième réflecteur de collimation secondaire (162) à partir dudit deuxième réflecteur plat (162) vers ledit troisième réflecteur plat (164) pour produire des rayons collimatés de rayonnement électromagnétique réfléchis par ledit troisième réflecteur plat (164) dans une direction parallèle à l'axe optique (158) dudit troisième réflecteur de collimation secondaire (150), les rayons collimatés réfléchis par ledit troisième réflecteur plat (164) étant ensuite réfléchis par ledit troisième réflecteur de collimation secondaire (150) vers ledit réflecteur de collimation (112) à travers le foyer (118) dudit réflecteur de collimation (112), et
(2) réfléchir les rayons collimatés de rayonnement électromagnétique réfléchis par ledit troisième réflecteur de collimation secondaire (150) à partir dudit troisième réflecteur plat (164) vers ledit deuxième réflecteur plat (162) pour produire des rayons collimatés de rayonnement électromagnétique réfléchis par ledit deuxième réflecteur plat (162) dans une direction parallèle à l'axe optique (148) dudit deuxième réflecteur de collimation secondaire (140), les rayons collimatés réfléchis par ledit deuxième réflecteur plat (162) étant ensuite réfléchis par ledit deuxième réflecteur de collimation secondaire (140) vers ledit premier réflecteur de collimation secondaire à travers le foyer (136) dudit premier réflecteur de collimation secondaire (130).

2. Dispositif optique selon la revendication 1, dans lequel ladite source (20) comprend une lampe à arc émettrice de lumière.

3. Dispositif optique selon la revendication 2, dans lequel ladite lampe à arc comprend une lampe choisie dans le groupe comprenant une lampe à xénon, une lampe à halogénure de métal, une lampe HID ou une lampe à mercure.

4. Dispositif optique selon la revendication 1, dans lequel ladite source (20) comprend une lampe à incandescence.

5. Dispositif optique selon la revendication 1, dans lequel ladite cible (60) comprend un guide d'ondes choisi dans le groupe comprenant une fibre optique à âme unique, un faisceau de fibres, un faisceau de fibres fusionnées (62) ou un homogénéisateur.

6. Dispositif optique selon la revendication 5, dans lequel ledit guide d'ondes (60) est choisi dans le groupe constitué par les guides d'ondes de section circulaire, les guides d'ondes de section polygonale, les guides d'ondes à impédance croissante et les combinaisons de ceux-ci.
